# EUROPÄISCHE PATENTSCHRIFT

(11) **EP 3 615 907 B1**
(45) Veröffentlichungstag und Bekanntmachung des Hinweises auf die Patenterteilung: **11.12.2024**
(21) Anmeldenummer: 18709304.2
(22) Anmeldetag: 28.02.2018
(51) Int. Cl.: G01M 11/00, B25J 19/02, B25J 9/16

(54) **PRÜFVORRICHTUNG ZUR OPTISCHEN PRÜFUNG EINES OBJEKTES, PRODUKTIONSANLAGE MIT DER PRÜFVORRICHTUNG UND VERFAHREN ZUR OPTISCHEN PRÜFUNG DES OBJEKTES MIT DER PRÜFVORRICHTUNG**
TEST APPARATUS FOR OPTICAL TESTING OF AN OBJECT, PRODUCTION PLANT WITH THE TEST APPARATUS AND METHOD FOR OPTICALLY TESTING THE OBJECT WITH THE TEST APPARATUS
APPAREIL D'ESSAI POUR TEST OPTIQUE D'UN OBJET, USINE DE PRODUCTION AVEC L'APPAREIL D'ESSAI ET PROCÉDÉ DE TEST OPTIQUE DE L'OBJET AVEC L'APPAREIL D'ESSAI

(30) Priorität: 27.04.2017 DE 102017207069
(43) Veröffentlichungstag der Anmeldung: 04.03.2020
(73) Patentinhaber: Robert Bosch GmbH, 70442 Stuttgart (DE)
(72) Erfinder: THOBE, Alexander, 70197 Stuttgart (DE); GEILER, Thomas, 71134 Adlingen (DE); ACKERMANN, Jens, 71229 Leonberg (DE); NATTERER, Andreas, 70499 Stuttgart (DE)
(86) Internationale Anmeldenummer: PCT/EP2018/054863
(87) Internationale Veröffentlichungsnummer: WO 2018/197078

(56) Entgegenhaltungen:
- EP-A1- 2 639 766
- EP-A2- 2 684 651
- WO-A1-03/039820
- DE-A1- 102012 014 451
- JP-A- 2016 109 669
- US-A1- 2017 106 540
- US-A1- 2017 358 048

## Beschreibung

### Stand der Technik

Die Erfindung betrifft eine Prüfvorrichtung zur optischen Prüfung eines Objektes, mit einer Kameraeinrichtung, wobei die Kameraeinrichtung eine Schärfenebene mit Aufnahmebereich aufweist und ausgebildet ist, ein Bild des Aufnahmebereichs aufzunehmen, mit einer Handhabungseinrichtung zum Greifen und/oder Aufnehmen des Objektes, mit einer Steuereinrichtung zur Ansteuerung der Handhabungseinrichtung, wobei die Steuereinrichtung ausgebildet ist, die Handhabungseinrichtung zur Positionierung des Objektes in dem Aufnahmebereich anzusteuern.

Zur Automatisierung von Sichtprüfungsaufgaben werden in der Fertigung üblicherweise Sondermaschinen eingesetzt. Dabei muss das zu prüfende Produktspektrum inklusive aller Prüfpositionen bei der Anlagenentwicklung bekannt sein. Dazu werden produktspezifisch für alle Prüfaufgaben fixe Kamerapositionen festgelegt. Während der Inbetriebnahme werden die Bildweite und/oder die Brennweite manuell so justiert, dass die Bildqualität den Anforderungen an die Prüfaufgabe entspricht und anschließend mechanisch fixiert. Ein späteres Nachbessern ist manchmal möglich, jedoch ist dies sehr aufwendig und mit hohen Kosten verbunden.

Die Druckschrift DE 44 26 968 C2 offenbart eine optische Untersuchungsvorrichtung mit wenigstens einer Lichtquelle, einem Lichtleiter und einem lichtempfangenden Inspektionssystem, wobei die wenigstens eine Lichtquelle Licht in den Lichtleiter einspeist. Die optische Untersuchungsvorrichtung weist eine an einer Innenseite von vier Wandungen begrenzte Öffnung auf, in der ein zu untersuchendes Objekt aufgenommen ist und an seinem äußeren Rand Reflektoren und unterschiedlich zu diesen geneigte weitere Reflektoren aufweist, wobei die Reflektoren einen Teil des eingespeisten Lichtes so umlenken, dass die Seitenflächen des Objektes beleuchtet werden, die weiteren Reflektoren einen weiteren Teil des eingespeisten Lichtes so umlenken, dass die Oberseite des Objektes beleuchtet wird und die Wandung das von den Seitenflächen des Objektes reflektierte Licht in Richtung auf das Inspektionssystem umlenken, das der Oberseite des Objektes zugewandt ist.

In der Druckschrift EP 2 684 651 A2 offenbart ein Robotersystem mit einer Bewegungseinheit, beispielsweise einem Roboterarm, und einer Kamera. Die Bewegungseinheit ist in einem Arbeitsraum bewegbar. Eine Speichereinheit weist ein Formmodell der Bewegungseinheit auf. Basierend auf einem Matchingprozess zwischen Bilder der Kamera und dem Formmodell wird die Lage und Position der Bewegungseinheit bestimmt.

Die Druckschrift WO 03/039820 A1 beschreibt eine Methode zur Bestimmung der Position und Lage eines Objekts im dreidimensionalen Raum. Mittels einer Kamera werden dabei Bilder vom Objekt aufgenommen, die anschließend ausgewertet und mit einem Modell verglichen werden.

In der Druckschrift EP 2 639 766 A1 ist eine Vorrichtung offenbart, mittels der ein Modell eines Untersuchungsobjektes erstellt werden kann. Die Modellerstellung erfolgt basierend Bildaufnahmen des Untersuchungsobjekts.

Die Druckschrift DE 10 2012 014 451 A1, die den nächstkommenden Stand der Technik bildet, beschreibt ein Verfahren zum Steuern eines Roboters. An einem Roboterarm des Roboters befindet sich eine Sensoreinheit. Der Roboterarm wird dabei so angesteuert, dass basierend auf Sensordaten und einem Modell ein linienförmiger Bereich eines Prüfobjektes überprüft wird.

### Offenbarung der Erfindung

Im Rahmen der Erfindung wird eine Prüfvorrichtung zur optischen Prüfung eines Objektes mit den Merkmalen des Anspruchs 1 vorgeschlagen. Ferner wird eine Produktionsanlage mit den Merkmalen des Anspruchs 11 und ein Verfahren zur optischen Prüfung des Objektes mit der Prüfvorrichtung mit den Merkmalen des Anspruchs 12 vorgeschlagen. Bevorzugte und/oder vorteilhafte Ausführungsformen der Erfindung ergeben sich aus den Unteransprüchen, der nachfolgenden Beschreibung sowie den beigefügten Figuren.

Erfindungsgemäß wird eine Prüfvorrichtung zur optischen Prüfung eines Objektes vorgeschlagen. Die Prüfvorrichtung ist eine stationäre oder eine mobile Prüfvorrichtung. Insbesondere ist die Prüfvorrichtung zur Integration in einer Produktionsanlage, in einem Handarbeitsplatz oder als Standalone-Anlage ausgebildet. Besonders bevorzugt ist es, dass die Prüfvorrichtung eine Pick-and-Place-Prüfvorrichtung ist.

Die optische Prüfung entspricht insbesondere einer Sichtprüfung des Objektes, beispielsweise im sichtbaren Wellenlängenbereich, im infraroten Wellenlängenbereich oder im ultravioletten Wellenlängenbereich des Lichtes. Das Objekt ist beispielsweise ein Bauteil, ein Werkstück und/oder ein Produkt einer Produktionsanlage. Das Objekt weist im Gesamten oder Abschnittsweise eine glänzende, eine reflektierende, eine matte, oder absorbierende Oberfläche auf. Das Objekt kann unterschiedliche Größe aufweisen, beispielsweise kleiner als zehn Zentimeter sein oder größer sein als einhundert Zentimeter. Die Prüfvorrichtung ist insbesondere ausgebildet, ein unterschiedliches Portfolio an Objekten optisch zu prüfen, insbesondere unterschiedliche Objekte optisch zu prüfen.

Die Prüfvorrichtung weist eine Kameraeinrichtung auf. Vorzugsweise umfasst die Kameraeinrichtung eine Kamera oder eine Mehrzahl an Kameras, wie beispielsweise mindestens zwei Kameras und im Speziellen mindestens zehn Kameras. Insbesondere weist die Kameraeinrichtung eine Durchlichtkamera auf. Die Kameraeinrichtung und/oder die Kameras weisen eine Aufnahmerichtung auf. Die Kameraeinrichtung weist mindestens eine Schärfenebene auf, für eine Vielzahl an Kameras, welche von der Kameraeinrichtung umfasst sind, kann die Kameraeinrichtung eine Mehrzahl an Schärfenebenen aufweisen. Die Schärfenebene kann auch als Schärfenbereich ausgebildet sein. Die Schärfenebene umfasst einen Aufnahmebereich, wobei für das Vorhandensein von mehreren Schärfenebenen die Kameraeinrichtung eine Mehrzahl an Aufnahmebereichen umfassen kann. Die Aufnahmerichtung steht insbesondere senkrecht auf der Aufnahmeebene. Die Aufnahmeebene ist insbesondere der Bereich, der von der Kameraeinrichtung scharf vollständig in dem Bild abgebildet wird.

Die Kameraeinrichtung ist ausgebildet, mindestens ein Bild des Aufnahmebereichs aufzunehmen. Die Kamera ist insbesondere eine Videokamera, alternativ ist die Kamera eine Einzelbildkamera. Insbesondere ist die Kamera eine CCD-Kamera, beispielsweise eine Farbkamera oder eine Schwarz-Weiß-Kamera. Alternativ ist die Kamera eine CMOS-Kamera. Die Kamera kann auch eine Infrarot-Kamera oder eine Ultraviolett-Kamera sein.

Die Prüfvorrichtung umfasst eine Handhabungseinrichtung zum Greifen und/oder Aufnehmen des Objektes. Insbesondere ist die Handhabungseinrichtung zum Bewegen des Objektes ausgebildet, beispielsweise zum Bewegen des Objektes entlang eines Pfades und/oder einer Trajektorie. Die Handhabungseinrichtung ist dabei beispielsweise ein Roboter, insbesondere ein Roboterarm. Die Handhabungseinrichtung ist vorzugsweise ein Dreiachs-, ein Sechsachs- oder ein Mehrachs-Roboter. Die Handhabungseinrichtung weist beispielsweise einen Greifer auf, wobei der Greifer zum Greifen und Halten des Objektes ausgebildet ist. Die Handhabungseinrichtung kann dabei das Objekt beispielsweise pneumatisch, mechanisch oder mittels einer elektromagnetischen Kraft halten. Die Handhabungseinrichtung hält und/oder nimmt das Objekt dabei insbesondere kraftschlüssig, formschlüssig oder reibschlüssig auf.

Die Prüfvorrichtung weist eine Steuereinrichtung zur Ansteuerung der Handhabungseinrichtung auf. Die Steuereinrichtung ist beispielsweise als eine Computereinheit, als eine Prozessoreinheit oder als ein Mikrochip ausgebildet. Beispielsweise steuert die Steuereinrichtung die Handhabungseinrichtung mittels Steuersignalen an, wobei die Steuereinrichtung datentechnisch und/oder signaltechnisch mit der Handhabungseinrichtung verbunden ist. Besonders bevorzugt ist es, dass die Steuereinrichtung Teil der Handhabungseinrichtung ist und/oder von dieser umfasst wird.

Die Steuereinrichtung ist ausgebildet, die Handhabungseinrichtung zur Positionierung des Objektes in dem Aufnahmebereich anzusteuern. Dabei steuert die Steuereinrichtung beispielsweise die Handhabungseinrichtung mit Steuersignalen an, wobei die Handhabungseinrichtung basierend auf den Steuersignalen das Objekt in den Aufnahmebereich bewegt und/oder das Objekt in dem Aufnahmebereich positioniert. Insbesondere ist die Positionierung des Objektes in dem Aufnahmebereich die Positionierung der Oberfläche des Objektes im Aufnahmebereich.

Die Steuereinrichtung umfasst ein Modell des Objektes. Insbesondere ist das Modell des Objektes in der Steuereinrichtung, beispielsweise datentechnisch, hinterlegbar. Das Modell des Objektes ist vorzugsweise ein 3D-Modell, im Speziellen ist das Modell des Objektes ein CAD-Modell.

Die Steuereinrichtung ist ausgebildet, die Handhabungseinrichtung zur Positionierung des Objektes in dem Aufnahmebereich basierend auf dem Modell des Objektes anzusteuern. Dabei kann die Steuereinrichtung die Handhabungseinrichtung zur Bewegung des Objektes entsprechend einer Trajektorie zum Aufnahmebereich basierend auf dem Modell ansteuern. Insbesondere nutzt die Steuereinrichtung das Modell, die Trajektorie und/oder den Pfad zu berechnen und/oder zu bestimmen, auf welcher die Handhabungseinrichtung das Objekt in den Aufnahmebereich bewegen muss.

Der Erfindung liegt die Überlegung zugrunde, eine Prüfvorrichtung bereitzustellen, welche wandlungsfähig an unterschiedliche Objekte anpassbar ist, wobei zum Wechsel der zu prüfenden Objekte die Optik und/oder die Handhabungseinrichtung nicht anzupassen sind. Insbesondere ermöglicht die Erfindung eine wandlungsfähige Prüfvorrichtung zur Prüfung eines Objektes, ohne eine Hardwareänderung durchführen zu müssen, wenn sich das Objektportfolio der Prüfung ändert. Im Speziellen stellt die Prüfvorrichtung eine günstige Lösung der Nachteile des Stands der Technik dar.

In einer besonders bevorzugten Ausgestaltung der Erfindung ist die Steuereinrichtung ausgebildet, die Handhabungseinrichtung zur Positionierung des Objektes in der Schärfenebene basierend auf dem Modell anzusteuern. Insbesondere positioniert die Handhabungseinrichtung basierend auf den Steuersignalen das Objekt in der Schärfenebene der Kameraeinrichtung. Insbesondere ist die Positionierung des Objektes in der Schärfenebene die Positionierung der Oberfläche des Objektes in der Schärfenebene. Im Speziellen wird unter dem Aufnahmebereich ein Bereich verstanden, der vollständig innerhalb der Schärfenebene liegt.

Eine mögliche Ausgestaltung der Erfindung sieht vor, dass ein Abschnitt des Modells, insbesondere ein beliebiger Abschnitt des Modells, als Auswahlbereich auswählbar ist. Dazu umfasst die Prüfvorrichtung beispielsweise eine Eingabevorrichtung und/oder Eingabemittel, wobei ein Benutzer mittels der Eingabevorrichtung den Abschnitt des Modells als Auswahlbereich auswählen kann. Im Speziellen sind mehrere Abschnitte des Modells als Auswahlbereiche auswählbar. Vorzugsweise ist der Abschnitt des Modells grafisch im Modell, beispielsweise auf einer Anzeigevorrichtung, die von der Eingabevorrichtung umfasst ist, auswählbar.

Die Steuereinrichtung ist ausgebildet, einen zu dem Auswahlbereich korrespondierenden Abschnitt des Objektes als Objektauswahlbereich zu bestimmen. Der Objektauswahlbereich entspricht insbesondere dem Bereich auf dem Objekt, der entsprechend auf dem Modell als Auswahlbereich ausgewählt ist. Die Steuereinrichtung ist ausgebildet, die Handhabungseinrichtung zur Positionierung des Objektes mit dem Objektauswahlbereich in dem Aufnahmebereich und/oder der Schärfenebene anzusteuern. Insbesondere ist die Steuereinrichtung ausgebildet, die Handhabungseinrichtung so anzusteuern, dass das Objekt mit dem Objektauswahlbereich in den Aufnahmebereich und/oder die Schärfenebene verfahren wird und/oder dort positioniert wird. Bei einer Auswahl von mehreren Auswahlbereichen ist die Steuereinrichtung beispielsweise ausgebildet, korrespondierende Objektauswahlbereiche nacheinander im Aufnahmebereich und/oder der Schärfenebene der Kameraeinrichtung zu positionieren. Dieser Ausgestaltung liegt die Überlegung zugrunde, eine Prüfvorrichtung bereitzustellen, welche eine punktuelle und spezifische Prüfung des Objektes mit einer Prüfvorrichtung erlaubt.

In einer möglichen Ausgestaltung der Erfindung ist es vorgesehen, dass die Steuereinrichtung Vorrichtungsdaten umfasst. Die Vorrichtungsdaten umfassen insbesondere Informationen zur Geometrie, zum Aufbau, zu Abständen und/oder zu möglichen Bewegungen und/oder Trajektorien der Handhabungseinrichtung. Beispielsweise umfassen die Vorrichtungsdaten alle möglichen Pfade, welche die Handhabungseinrichtung abfahren kann und/oder auf welchen die Handhabungseinrichtung das Objekt bewegen kann.

Die Steuereinrichtung ist ausgebildet, die Handhabungseinrichtung basierend auf den Vorrichtungsdaten zur kollisionsfreien Positionierung des Objektes in dem Aufnahmebereich und/oder der Schärfenebene anzusteuern. Kollisionsfrei meint insbesondere ohne Zusammenstoß zwischen Objekt, Kameraeinrichtung und/oder Handhabungseinheit. Insbesondere ist die Steuereinrichtung ausgebildet, die Vorrichtungsdaten zu nutzen, einen Pfad und/oder eine Trajektorie zu bestimmen, auf welcher das Objekt kollisionsfrei und/oder crashfrei in dem Aufnahmebereich und/oder der Schärfenebene positioniert werden kann und/oder in den Aufnahmebereich und/oder die Schärfenebene verfahren werden kann. Dieser Ausgestaltung liegt die Überlegung zugrunde, eine Prüfvorrichtung bereitzustellen, welche ein sicheres Handling des Objekts während der Prüfung ermöglicht.

Besonders bevorzugt ist es, dass die Prüfvorrichtung eine Beleuchtungseinrichtung umfasst. Die Beleuchtungseinrichtung weist insbesondere eine Mehrzahl an Lichtquellen auf. Insbesondere weist die Beleuchtungseinrichtung mehr als zehn, insbesondere mehr als fünfzehn und im Speziellen mehr als einhundert Lichtquellen auf. Die Lichtquellen sind beispielsweise LEDs. Insbesondere sind die Lichtquellen Weißlichtquellen, Infrarotquellen, farbige Lichtquellen und im Speziellen RGB-Lichtquellen. Die Lichtquellen sind insbesondere Punktlichtquellen, alternativ und/oder ergänzend sind die Lichtquellen flächige Lichtquellen, wie beispielsweise OLED-Flächen.

Die Steuereinrichtung ist ausgebildet, die Beleuchtungseinheit anzusteuern, um ein kontrastreiches Bild des Aufnahmebereichs und/oder der Schärfenebene, insbesondere um ein kontrastreiches Bild des im Aufnahmebereich und/oder in der Schärfenebene positionierten Objektes mit der Kameraeinrichtung aufnehmen zu können. Dabei ist die Steuereinrichtung beispielsweise ausgebildet, die Lichtquellen der Beleuchtungseinheit einzeln und/oder gruppenweise anzusteuern, beispielsweise eine LED und/oder eine Gruppe von LEDs an- oder abzuschalten, sodass die gewünschte Ausleuchtung des Aufnahmebereichs und/oder der Schärfenebene erzielt wird. Dieser Ausgestaltung liegt die Überlegung zugrunde, eine Prüfvorrichtung bereitzustellen, welche qualitativ hochwertige und auswertbare Bilder des Objektes aufnimmt. Insbesondere ermöglicht diese Ausgestaltung eine kontinuierliche Qualität von Bildern.

Eine mögliche Ausgestaltung sieht vor, dass die Steuereinrichtung mindestens ein auswählbares Prüfprogramm umfasst. Das Prüfprogramm enthält beispielsweise Informationen, welche Art von Bild, beispielsweise Infrarotbild, visuelles Bild oder Schwarz-Weiß-Bild aufgenommen werden soll. Insbesondere umfasst das Prüfprogramm den Auswahlbereich des Objektes, der untersucht werden soll. Im Speziellen umfasst das Prüfprogramm auch Informationen zur Beleuchtung durch die Beleuchtungseinheit.

Die Steuereinrichtung ist insbesondere ausgebildet, die Handhabungseinrichtung basierend auf dem ausgewählten Prüfprogramm zur Positionierung des Objektes in dem Aufnahmebereich und/oder der Schärfenebene anzusteuern. Insbesondere ist die Steuereinrichtung ausgebildet, basierend auf dem Prüfprogramm den Objektauswahlbereich des Objektes als Bild aufzunehmen, welcher korrespondierend zu dem Auswahlbereich des im Prüfprogramm hinterlegten Auswahlbereichs ist. Im Speziellen ist das Prüfprogramm mittels der Eingabevorrichtung auswählbar, anpassbar und/oder einstellbar. Dieser Ausgestaltung liegt die Überlegung zugrunde, eine Prüfungsvorrichtung bereitzustellen, welche von einem Nutzer besonders einfach auf die vorzunehmende Prüfung einstellbar ist.

Besonders bevorzugt ist es, dass die Steuereinrichtung ausgebildet ist, die Beleuchtungseinheit anzusteuern, um ein Bild des im Aufnahmebereich und/oder in der Schärfenebene positionierten Objektes entsprechend des Prüfprogramms aufzunehmen. Insbesondere ist die Steuereinrichtung ausgebildet, das Objekt durch Ansteuern der Beleuchtungseinheit so auszuleuchten, dass eine Bildaufnahme entsprechend des Prüfprogrammes aufnehmbar ist.

Eine Ausgestaltung sieht vor, dass die Prüfvorrichtung einen Ruhedetektor aufweist. Vorzugsweise ist der Ruhedetektor am Greifer und/oder an der Handhabungseinrichtung angeordnet. Der Ruhedetektor ist insbesondere ein Schwingungsdetektor und/oder ein Beschleunigungssensor. Der Ruhedetektor ist ausgebildet, zu detektieren, wann die Handhabungseinrichtung und/oder der Greifer in Ruhe ist und/oder wann die Handhabungseinrichtung und/oder der Greifer schwingungsfrei ist. Die Kameraeinrichtung ist ausgebildet, ein Bild erst aufzunehmen, wenn der Ruhedetektor die Ruhe und/oder die Schwingungsfreiheit der Handhabungseinrichtung detektiert hat. Dieser Ausgestaltung liegt die Überlegung zugrunde, eine Prüfvorrichtung bereitzustellen, welche eine Aufnahme von nicht auswertbaren und/oder verwackelten Bildern des Objektes ausschließt.

In einer besonders bevorzugten Ausgestaltung der Erfindung ist die Kameraeinrichtung eine Kameraeinrichtung mit fester Brennweite und/oder mit fester Bildweite. Insbesondere umfasst die Kameraeinrichtung Kameras mit fester Brennweite und/oder mit fester Bildweite. Die Brennweite und/oder die Bildweite der Kameraeinrichtung ist damit insbesondere nicht einstellbar. Insbesondere ist die Kameraeinrichtung eine nicht fokussierbare Kameraeinrichtung. Dieser Ausgestaltung liegt die Überlegung zugrunde, eine besonders günstige Prüfvorrichtung bereitzustellen, ohne teure Fokussierobjektive für die Kameraeinrichtungen verwenden zu müssen.

Eine besonders bevorzugte Ausgestaltung der Erfindung sieht vor, dass die Prüfvorrichtung ein Startpositionsbestimmungsmodul umfasst. Als Optimierungsparameter zur Bestimmung der Startposition wird insbesondere die Schärfe des Bildes herangezogen. Beispielsweise ist es auch möglich, dass das Startpositionsbestimmungsmodul Teil der Steuereinrichtung ist. Das Startpositionsbestimmungsmodul ist ausgebildet, eine Startposition des von der Handhabungseinrichtung gegriffenen und/oder gehaltenen Objektes zu bestimmen. Im Speziellen ist das Startbestimmungsmodul ausgebildet, die Startposition für eine feste Brenn- und Bildweite zu bestimmen. Insbesondere umfasst die Startposition die Position und/oder Lage des von der Halteeinrichtung gegriffen Objektes, insbesondere zu einem Anfangszeitpunkt. Dieser Ausgestaltung liegt die Überlegung zugrunde, eine Prüfvorrichtung bereitzustellen, welche eine Referenzierung einer Startposition des Objektes ermöglicht, insbesondere, damit der Pfad und/oder die Trajektorie zum Positionieren des Objektes im Aufnahmebereich korrekt bestimmbar und/oder ausführbar ist.

Dabei kann es vorgesehen sein, dass die Steuereinrichtung ausgebildet ist, die Handhabungseinrichtung anzusteuern, dass das Objekt von der Startposition in den Aufnahmebereich bewegt und/oder im Aufnahmebereich positioniert wird. Insbesondere ist die Steuereinrichtung ausgebildet, die Handhabungseinrichtung so anzusteuern, dass das Objekt crash- und/oder kollisionsfrei in den Aufnahmebereich von der Startposition aus bewegt wird. Vorzugsweise ist die Steuereinrichtung ausgebildet, den Pfad bezüglich kurzer Taktzeiten zu optimieren.

Besonders bevorzugt ist es, dass das Startpositionsbestimmungsmodul ausgebildet ist, die Kameraeinrichtung zur Aufnahme mindestens eines Schätzbildes, insbesondere mindestens zweier Schätzbilder und im Speziellen mindestens dreier Schätzbilder anzusteuern. Vorzugsweise werden weniger als zehn Schätzbilder und im Speziellen weniger als fünf Schätzbilder aufgenommen. Besonders bevorzugt ist die Aufnahme von drei Schätzbildern. Das Schätzbild ist vorzugsweise ein Livebild des Objektes aufgenommen durch die Kameraeinrichtung. Insbesondere sind die Schätzbilder Bilder von Bildabschnitten des Objektes, wobei diese Bildabschnitte unweit beabstandet sind. Vorzugsweise sind die unterschiedlichen Bildabschnitte des Objektes ohne Bewegen und/oder mit geringem Bewegen der Handhabungseinrichtung von der Kameraeinrichtung als Schätzbild aufnehmbar. Beispielsweise weisen die Bildabschnitte mindestens paarweise einen Überlapp auf.

Das Startpositionsbestimmungsmodul ist ausgebildet, das Modell mit dem mindestens einen Schätzbild abzugleichen, beispielsweise mit dem CAD-Modell abzugleichen Insbesondere ist das Startpositionsbestimmungsmodul ausgebildet, das Modell mit einer Mehrzahl an Schätzbildern des Objektes abzugleichen. Das Startpositionsbestimmungsmodul ist ferner ausgebildet, durch den Abgleich von Modell mit dem mindestens einen Schätzbild die Startposition des Objektes zu bestimmen, insbesondere die Lage, die Position und/oder die Anordnung des Objektes in der Startposition zu bestimmen. Die Bestimmung der Startposition durch das Startpositionsbestimmungsmodul ist insbesondere als eine Initialisierung der Prüfvorrichtung zu verstehen. Dieser Ausgestaltung liegt die Überlegung zugrunde, eine Prüfvorrichtung bereitzustellen, welche besonders einfach den Startpunkt einer Position des zu vermessenden Objektes bestimmt. Ferner ist es eine Überlegung der Erfindung die Startposition ohne vollständiges Abtasten des Objektes zu bestimmen, wobei so insbesondere die Zeit zur Bestimmung der Startposition reduzierbar ist, da Beruhigungszeiten der Mechanik beim Abfahren des Objektes nicht abgewartet werden müssen.

Einen weiteren Gegenstand der Erfindung bildet eine Produktionsanlage mit der Prüfvorrichtung. Die Produktionsanlage ist insbesondere ein Arbeitsplatz, ein Roboterarbeitsplatz, ein Maschinenarbeitsplatz oder ein Handarbeitsplatz für einen Menschen zur Produktion des Objektes. Vorzugsweise ist die Prüfvorrichtung ausgebildet, automatisch und/oder selbstständig sich ein Objekt produziert von der Produktionsanlage zu greifen und/oder dieses aufzunehmen. Insbesondere ist die Prüfvorrichtung ausgebildet, mindestens neunzig Prozent der produzierten Teile optisch zu prüfen. Im Speziellen ist die Prüfvorrichtung ausgebildet, alle, also insbesondere einhundert Prozent, der produzierten Objekte der Produktionsanlage optisch zu prüfen. Dieser Ausgestaltung liegt die Überlegung zugrunde, eine Produktionsanlage, insbesondere eine Produktionsanlage mit wechselndem Produktportfolio, mit einer Prüfvorrichtung bereitzustellen, welche eine besonders einfache und günstige optische Prüfung der produzierten Objekte ermöglicht.

Einen weiteren Gegenstand der Erfindung bildet ein Verfahren zur optischen Prüfung des Objektes mit der Prüfvorrichtung. Das Verfahren ist insbesondere dadurch gekennzeichnet, dass die Steuereinrichtung die Handhabungseinrichtung ansteuert. Insbesondere steuert die Steuereinrichtung die Handhabungseinrichtung so an, dass das Objekt basierend auf dem Modell in dem Aufnahmebereich der Kameraeinrichtung positioniert wird. Insbesondere wird das Objekt durch die Handhabungseinrichtung in dem Aufnahmebereich und/oder in der Schärfenebene positioniert. Diesem Gegenstand der Erfindung liegt die Überlegung zugrunde, ein einfaches und kostengünstiges Verfahren zur optischen Prüfung eines Objektes bereitzustellen.

Eine besonders bevorzugte Ausgestaltung des Verfahrens sieht vor, dass die Handhabungseinrichtung das Objekt aufnimmt. Beispielsweise nimmt die Handhabungseinrichtung das Objekt aus der Produktionsanlage direkt auf. Dabei ist die Handhabungseinrichtung beispielsweise eine Pick-and-Place-Einrichtung. Die Kameraeinrichtung nimmt bei dieser Ausgestaltung mindestens ein Schätzbild des Objektes auf, wobei das Startpositionsbestimmungsmodul dieses Schätzbild mit dem Modell des Objektes vergleicht und basierend auf diesem Vergleich die Startposition des Objektes bestimmt.

Weitere Merkmale, Vorteile und Wirkungen der Erfindung ergeben sich aus der nachfolgenden Beschreibung bevorzugter Ausführungsbeispiele der Erfindung. Dabei zeigt:

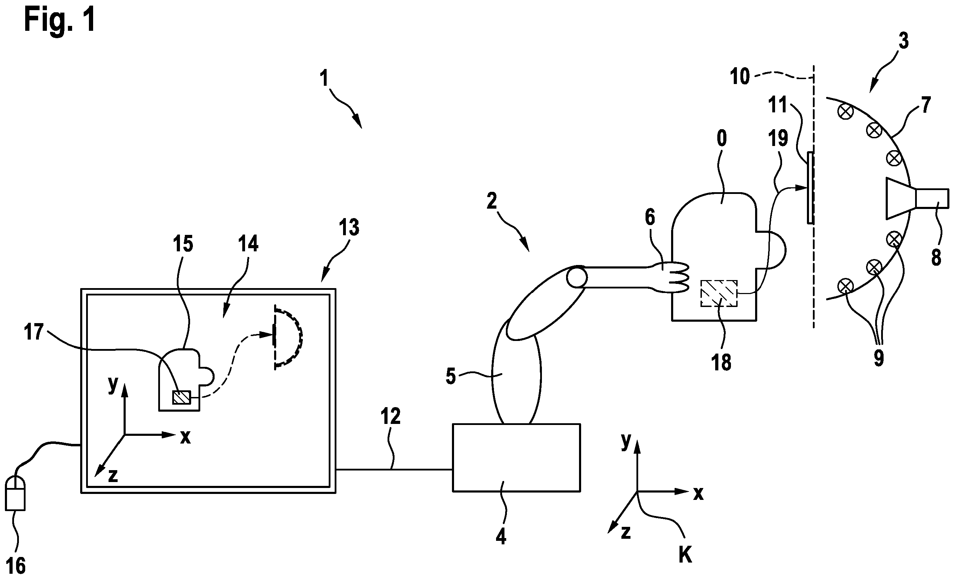

Figur 1 ein Ausführungsbeispiel der Prüfvorrichtung.

Figur 1 zeigt ein Ausführungsbeispiel der Prüfvorrichtung 1. Die Prüfvorrichtung 1 umfasst eine Handhabungseinrichtung 2 und eine Kameraeinrichtung 3. Die Handhabungseinrichtung 2 ist zum Handhaben und Greifen eines Objektes O ausgebildet.

Die Handhabungseinrichtung 2 umfasst einen Sockel 4 und einen darauf gelagerten und/oder angeordneten Mehrachsroboter 5. Insbesondere ist der Sockel 4 zum schwingungsfreien und/oder stabilen Lagern des Mehrachsroboters 5. An seinem freien Ende umfasst der Mehrachsroboter 5 einen Greifer 6. Der Greifer 6 ist zum Greifen und Halten, insbesondere kraftschlüssigen, formschlüssigen und/oder reibschlüssigen Halten des Objektes O ausgebildet. Der Greifer 6 ist in einem Arbeitsbereich der Handhabungseinrichtung 2 bewegbar, wobei der Greifer 6 auf einem festlegbaren Pfad innerhalb des Arbeitsbereiches bewegbar ist.

Das Objekt O ist insbesondere ein Bauteil. Vorzugsweise ist das Bauteil ein Elektronikbauteil, ein Automobilzulieferteil oder ein Produktionsprodukt. Das Objekt O ist vorzugsweise kleiner als zehn Zentimeter und im Speziellen kleiner als fünf Zentimeter. Alternativ kann das Objekt O ein größerformatiges Objekt sein, beispielsweise ein Kotflügel, wobei ein solches Objekt vorzugsweise eine Länge größer als ½ Meter und im Speziellen größer als einen Millimeter aufweist. Das Objekt O kann ein flächiges Objekt sein, alternativ ist das Objekt O ein voluminöses Objekt.

Ein von dem Greifer gegriffenes Objekt O ist insbesondere in dem Arbeitsbereich der Handhabungseinrichtung 2 bewegbar, wobei das Objekt O denselben Pfad beschreibt wie der Greifer 6 der Handhabungseinrichtung 2.

Zur Orientierung ist hilfsweise ein Koordinatensystem K gezeigt, wobei das Koordinatensystem K eine X-Richtung, eine Y-Richtung an eine Z-Richtung definieren. Der Pfad, welcher von dem Greifer 6 und/oder dem Objekt O in dem Arbeitsbereich der Handhabungseinrichtung 2 durchlaufen wird ist insbesondere durch die X-Richtung, Y-Richtung und Z-Richtung beschreibbar.

Die Prüfvorrichtung 1 umfasst die Kameraeinrichtung 3, welche ein Gehäuse 7, eine Kamera 8 und eine Beleuchtungseinheit 9 aufweist. Die Kamera 8 ist beispielsweise eine CCD-Kamera, alternativ ist die Kamera 8 eine CMOS-Kamera.

Das Gehäuse 7 ist als ein kuppelförmiger Hohlkörper ausgebildet, in diesem Ausführungsbeispiel als ein halbkugelförmiger Hohlkörper. Der halbkugelförmige Hohlkörper ist insbesondere in der Äquatorialebene aufgeschnitten. Das Gehäuse 7 weist eine Öffnung auf, wobei in der Öffnung eine Schärfenebene 10 der Kamera 8 und/oder der Kameraeinrichtung 3 angeordnet ist. Das Gehäuse 7 weist einen Innenbereich auf, wobei der Innenbereich vorzugsweise reflektierend ist, alternativ ist der Innenbereich absorbierend.

In dem Innenbereich des Gehäuses 7 ist die Beleuchtungseinheit 9 angeordnet, wobei die Beleuchtungseinheit 9 eine Mehrzahl an Leuchtquellen, insbesondere LEDs umfasst. Die LEDs sind insbesondere äquidistant und/oder gleichförmig auf der Innenseite des Gehäuses 7 angebracht. Gegenüber der Schärfenebene 10 befindet sich eine weitere Öffnung, wobei diese Öffnung an dem Pol des halbkugelförmigen Gehäuses 7 angeordnet ist. In dieser Öffnung am Pohl ist die Kamera 8 mit einer Blickrichtung in Richtung der Schärfenebene 10 angeordnet.

Die Schärfenebene 10 weist einen Aufnahmebereich 11 auf. Der Aufnahmebereich 11 ist insbesondere der Bereich, der von der Kamera 8 vollständig, insbesondere kontrastreich abgebildet wird. Der Aufnahmebereich 11 ist insbesondere ein Bereich mit einem Flächeninhalt größer als ein Quadratzentimeter und im Speziellen größer als zehn Quadratzentimeter. Der Aufnahmebereich 11 ist ein flächiger Bereich, insbesondere ein ebener Bereich. Alternativ ist der Aufnahmebereich 11 ein gekrümmter Bereich, wobei hierbei auch die Schärfenebene 10 eine gekrümmte Ebene ist.

Die Handhabungseinrichtung 2 ist über eine datentechnische Verbindung 12 mit der Steuereinrichtung 13 verbunden. Die datentechnische Verbindung 12 kann eine kabelgebundene Verbindung sein, alternativ ist die Verbindung 12 eine virtuelle Verbindung, beispielsweise eine drahtlose Verbindung in Form einer Infrarot-Verbindung.

Die Steuereinrichtung 13 ist beispielweise als eine Computereinheit ausgebildet. Die Steuereinheit 13 umfasst vorzugsweise eine Anzeigeeinheit 14. Die Anzeigeeinheit 14 ist insbesondere ein Touchscreen-Monitor. Die Steuereinrichtung 13 umfasst ein Modell 15 des Objektes O. Das Modell 15 ist insbesondere ein 3D-Modell, beispielsweise ein CAD-Modell. Das Modell 15 ist im Speziellen ein maßstabsgetreues Modell. Vorzugsweise umfasst das Modell 15 die Position, Lage, die Position und/oder geometrische Informationen der Kameraeinrichtung 3. Besonders bevorzugt ist es, dass das Modell 15 die Position der Schärfenebene 10 und insbesondere des Aufnahmebereiches 11 umfasst.

Die Steuereinrichtung 13 weist Eingabemittel 16 auf, wobei die Eingabemittel 16 beispielsweise eine Computermaus sind, alternativ kann das Eingabemittel 16 auch als der Touchscreen-Monitor ausgebildet sein. Mittels der Eingabemittel 16 kann ein Nutzer einen Auswahlbereich 17 in dem Modell 15 des Objektes O auswählen. Insbesondere ist der Auswahlbereich 17 frei in dem Modell 15 auswählbar. Der Auswahlbereich 17 ist insbesondere ein flächiger Bereich welcher geradlinig und/oder krummlinig begrenzt sein kann. Zudem Auswahlbereich 17 des Modells 3 korrespondiert in der realen Welt auf dem Objekt O ein Objektauswahlbereich 18. Der Objektauswahlbereich 18 ist dabei der Bereich auf dem realen Objekt, der auf dem Modell 15 als Auswahlbereich 17 ausgewählt wurde. Die Steuereinrichtung 13 ist ausgebildet, eine Trajektorie 19 zu bestimmen, auf welcher das Objekt O mit dem Objektauswahlbereich 18 bewegt werden muss, damit der Objektauswahlbereich 18 in dem Aufnahmebereich 11 und/oder der Schärfenebene der Kameraeinrichtung 3 liegt. Diese Trajektorie 19 kann insbesondere mittels des Koordinatensystems K parametrisiert und/oder berechnet werden.

Die Handhabungseinrichtung 2 wird durch die Steuereinrichtung 13 dabei so angesteuert, dass das Objekt O mit dem Objektauswahlbereich 18 entlang der Trajektorie 19 bewegt wird und nach der Bewegung der Objektauswahlbereich 18 sich im Aufnahmebereich 11 befindet. Dadurch, dass das Objekt O mit dem Objektauswahlbereich 18 in den Aufnahmebereich 11 und/oder in die Schärfenebene bewegt wird, kann eine besonders kostengünstige Prüfvorrichtung 1 erreicht werden, da hierbei Kameras 8 mit konstanter Brennweite und ohne teure Fokussiereinrichtungen verwendet werden können.

## Patentansprüche

1. Prüfvorrichtung (1) zur optischen Prüfung eines Objektes (O) ,
mit einer Kameraeinrichtung, wobei die Kameraeinrichtung (3) eine Schärfenebene (10) mit Aufnahmebereich (11) aufweist und ausgebildet ist, ein Bild des Aufnahmebereichs (11) aufzunehmen,
mit einer Handhabungseinrichtung (2) zum Greifen und/oder Aufnehmen des Objektes (O),
mit einer Steuereinrichtung (13) zur Ansteuerung der Handhabungseinrichtung (2),
wobei die Steuereinrichtung (13) ausgebildet ist, die Handhabungseinrichtung (2) zur Positionierung des Objektes (O) in dem Aufnahmebereich (11) anzusteuern
wobei die Steuereinrichtung (13) ein Modell (15) des Objektes (O) umfasst,
wobei das Modell (15) des Objektes (O) als ein 3D-Modell ausgebildet ist,
wobei die Steuereinrichtung (13) ausgebildet ist, die Handhabungseinrichtung (2) zur Positionierung des Objektes (O) in dem Aufnahmebereich (11) basierend auf dem Modell (15) anzusteuern
**dadurch gekennzeichnet, dass**
die Handhabungseinrichtung (2) einen Ruhedetektor aufweist, wobei der Ruhedetektor ausgebildet ist zu detektieren, wann die Handhabungseinrichtung (2) in Ruhe ist und/oder schwingungsfrei ist, wobei die Kameraeinrichtung (3) ausgebildet ist, das Bild erst aufzunehmen, wenn die Handhabungseinrichtung (2) in Ruhe ist und/oder schwingungsfrei ist.

2. Prüfvorrichtung (1) nach Anspruch 1, **dadurch gekennzeichnet, dass** ein Abschnitt des Modells (15) als Auswahlbereich (17) auswählbar ist, wobei die Steuereinrichtung (13) ausgebildet ist, einen zu dem Auswahlbereich (17) korrespondierenden Abschnitt des Objektes (O) als Objektauswahlbereich (18) zu bestimmen und die Handhabungseinrichtung (2) zur Positionierung des Objektes (O) mit dem Objektauswahlbereich (18) in dem Aufnahmebereich (11) anzusteuern.

3. Prüfvorrichtung (1) nach einem der vorherigen Ansprüche, **dadurch gekennzeichnet, dass** die Steuereinrichtung (13) ausgebildet ist, die Handhabungseinrichtung (2) basierend auf den Vorrichtungsdaten zur kollisionsfreien Positionierung des Objektes (O) in dem Aufnahmebereich (11) anzusteuern.

4. Prüfvorrichtung (1) nach einem der vorherigen Ansprüche, **gekennzeichnet durch** eine Beleuchtungseinrichtung (9), wobei die Steuereinrichtung (13) ausgebildet ist, die Beleuchtungseinheit (9) anzusteuern, um ein kontrastreiches Bild des im Aufnahmebereich (11) positionierten Objektes (O) mit der Kameraeinrichtung aufzunehmen.

5. Prüfvorrichtung (1) nach einem der vorherigen Ansprüche, **dadurch gekennzeichnet, dass** die Steuereinrichtung (13) mindestens ein auswählbares Prüfprogramm umfasst, wobei die Steuereinrichtung (13) ausgebildet ist, die Handhabungseinrichtung (2) basierend auf dem ausgewählten Prüfprogramm zur Positionierung des Objektes (O) in dem Aufnahmebereich (11) anzusteuern.

6. Prüfvorrichtung (1) nach Anspruch 5, **dadurch gekennzeichnet, dass** die Steuereinrichtung (13) ausgebildet ist, die Beleuchtungseinheit (9) anzusteuern, um ein Bild des im Aufnahmebereich (11) positionierten Objektes (O) entsprechend des Prüfprogramms aufzunehmen.

7. Prüfvorrichtung (1) nach einem der vorherigen Ansprüche, **dadurch gekennzeichnet, dass** Kameraeinrichtung eine Kameraeinrichtung mit fester Brennweite und/oder mit fester Bildweite ist.

8. Prüfvorrichtung (1) nach einem der vorherigen Ansprüche, **gekennzeichnet durch** ein Startpositionsbestimmungsmodul, wobei das Startpositionsbestimmungsmodul ausgebildet ist, eine Startposition des von der Handhabungseinrichtung (2) gegriffenen und/oder gehaltenen Objekts (O) zu bestimmen.

9. Prüfvorrichtung (1) nach Anspruch 8, **dadurch gekennzeichnet, dass** die Steuereinrichtung (13) ausgebildet ist, die Handhabungseinrichtung (2) anzusteuern, dass das Objekt (O) von der Startposition in den Aufnahmebereich (11) bewegt und/oder im Aufnahmebereich (11) positioniert wird.

10. Prüfvorrichtung (1) nach Anspruch 8 oder 9, **dadurch gekennzeichnet, dass** das Startpositionsbestimmungsmodul ausgebildet ist, die Kameraeinrichtung zur Aufnahme mindestens eines Schätzbildes anzusteuern und das Modell (15) mit dem mindestens einen Schätzbild abzugleichen und durch den Abgleich die Startposition des Objektes (O) zu bestimmen.

11. Produktionsanlage mit der Prüfvorrichtung (1) nach einem der vorherigen Ansprüche zur Produktion des Objektes (O), wobei die Prüfvorrichtung (1) ausgebildet ist mindestens 90 Prozent der produzierten Objekte (O) optisch zu prüfen.

12. Verfahren zur optischen Prüfung des Objekts mit der Prüfvorrichtung (1) nach einem der vorherigen Ansprüche, **dadurch gekennzeichnet, dass** die Steuereinrichtung (13) die Handhabungseinrichtung (2) ansteuert, das Objekt basierend auf dem Modell (15) in dem Aufnahmebereich (11) der Kameraeinrichtung zu positionieren.

13. Verfahren zur optischen Prüfung nach Anspruch 12, **dadurch gekennzeichnet, dass** die Handhabungseinrichtung (2) das Objekt aufnimmt und/oder greift, die Kameraeinrichtung mindestens ein Schätzbild des Objektes aufnimmt, wobei das Startpositionsbestimmungsmodul das Schätzbild mit dem Modell (15) vergleicht und basierend auf dem Vergleich die Startposition bestimmt.

## Claims

1. Inspection apparatus (1) for optically inspecting an object (O),
comprising a camera device, the camera device (3) having a focal plane (10) with recording region (11) and being configured to record an image of the recording region (11),
comprising a handling device (2) for gripping and/or picking up the object (O),
comprising a control device (13) for controlling the handling device (2),
the control device (13) being configured to control the handling device (2) for positioning the object (O) in the recording region (11),
the control device (13) comprising a model (15) of the object (O),
the model (15) of the object (O) being configured as a 3D model,
the control device (13) being configured to control the handling device (2) for positioning the object (O) in the recording region (11) on the basis of the model (15),
**characterized in that**
the handling device (2) has a rest detector, the rest detector being configured to detect when the handling device (2) is at rest and/or is free of vibration, the camera device (3) being configured to record the image only if the handling device (2) is at rest and/or is free of vibration.

2. Inspection apparatus (1) according to Claim 1, **characterized in that** a section of the model (15) is selectable as a selection region (17), the control device (13) being configured to determine a section of the object (O) that corresponds to the selection region (17) as an object selection region (18), and to control the handling device (2) for positioning the object (O) with the object selection region (18) in the recording region (11).

3. Inspection apparatus (1) according to any of the preceding claims, **characterized in that** the control device (13) is configured to control the handling device (2) on the basis of the apparatus data for collision-free positioning of the object (O) in the recording region (11).

4. Inspection apparatus (1) according to any of the preceding claims, **characterized by** an illumination device (9), the control device (13) being configured to control the illumination unit (9) in order to record a high-contrast image of the object (O) positioned in the recording region (11) by way of the camera device.

5. Inspection apparatus (1) according to any of the preceding claims, **characterized in that** the control device (13) comprises at least one selectable inspection program, the control device (13) being configured to control the handling device (2) on the basis of the selected inspection program for positioning of the object (O) in the recording region (11).

6. Inspection apparatus (1) according to Claim 5, **characterized in that** the control device (13) is configured to control the illumination unit (9) in order to record an image of the object (O) positioned in the recording region (11) in accordance with the inspection program.

7. Inspection apparatus (1) according to any of the preceding claims, **characterized in that** the camera device is a camera device having a fixed focal length and/or having a fixed image distance.

8. Inspection apparatus (1) according to any of the preceding claims, **characterized by** a starting position determining module, the starting position determining module being configured to determine a starting position of the object (O) gripped and/or held by the handling device (2).

9. Inspection apparatus (1) according to Claim 8, **characterized in that** the control device (13) is configured to control the handling device (2) so that the object (O) moves from the starting position into the recording region (11) and/or is positioned in the recording region (11).

10. Inspection apparatus (1) according to Claim 8 or 9, **characterized in that** the starting position determining module is configured to control the camera device for recording at least one estimated image, and to compare the model (15) with the at least one estimated image, and to determine the starting position of the object (O) by way of the comparison.

11. Production facility comprising the inspection apparatus (1) according to any of the preceding claims for the production of the object (O), the inspection apparatus (1) being configured to optically inspect at least 90 per cent of the produced objects (O).

12. Method for optically inspecting the object using the inspection apparatus (1) according to any of the preceding claims, **characterized in that** the control device (13) controls the handling device (2) to position the object in the recording region (11) of the camera device on the basis of the model (15).

13. Method for optical inspection according to Claim 12, **characterized in that** the handling device (2) picks up and/or grips the object, the camera device records at least one estimated image of the object, the starting position determining module comparing the estimated image with the model (15) and determining the starting position on the basis of the comparison.

## Revendications

1. Dispositif d'inspection (1) pour l'inspection visuelle d'un objet (O), comprenant
un dispositif de caméra, dans lequel le dispositif de caméra (3) présente un plan de mise au point (10) avec une zone d'enregistrement (11) et est réalisé pour enregistrer une image de la zone d'enregistrement (11),
un dispositif de manipulation (2) pour saisir et/ou prendre l'objet (O),
un dispositif de commande (13) pour piloter le dispositif de manipulation (2),
dans lequel le dispositif de commande (13) est réalisé pour piloter le dispositif de manipulation (2) afin de positionner l'objet (O) dans la zone d'enregistrement (11),
dans lequel le dispositif de commande (13) comprend un modèle (15) de l'objet (O),
dans lequel le modèle (15) de l'objet (O) est réalisé sous forme de modèle 3D,
dans lequel le dispositif de commande (13) est réalisé pour piloter le dispositif de manipulation (2) afin de positionner l'objet (O) dans la zone d'enregistrement (11) sur la base du modèle (15),
**caractérisé en ce que**
le dispositif de manipulation (2) présente un détecteur de repos, le détecteur de repos étant réalisé pour détecter à quel moment le dispositif de manipulation (2) est au repos et/ou exempt de vibrations, dans lequel le dispositif de caméra (3) est réalisé pour n'enregistrer l'image que quand le dispositif de manipulation (2) est au repos et/ou exempt de vibrations.

2. Dispositif d'inspection (1) selon la revendication 1, **caractérisé en ce qu'**une partie du modèle (15) peut être sélectionnée comme une zone de sélection (17), le dispositif de commande (13) étant réalisé pour déterminer une partie de l'objet (O) correspondant à la zone de sélection (17) comme zone de sélection d'objet (18), et le dispositif de manipulation (2) étant réalisé pour positionner l'objet (O) avec la zone de sélection d'objet (18) dans la zone d'enregistrement (11).

3. Dispositif d'inspection (1) selon l'une quelconque des revendications précédentes, **caractérisé en ce que** le dispositif de commande (13) est réalisé pour piloter le dispositif de manipulation (2) sur la base des données de dispositif pour un positionnement sans collision de l'objet (O) dans la zone d'enregistrement (11).

4. Dispositif d'inspection (1) selon l'une quelconque des revendications précédentes, **caractérisé par** un dispositif d'éclairage (9), le dispositif de commande (13) étant réalisé pour piloter l'unité d'éclairage (9) pour enregistrer à l'aide du dispositif de caméra une image contrastée de l'objet (O) positionné dans la zone d'enregistrement (11).

5. Dispositif d'inspection (1) selon l'une quelconque des revendications précédentes, **caractérisé en ce que** le dispositif de commande (13) comprend au moins un programme d'inspection pouvant être sélectionné, dans lequel le dispositif de commande (13) est réalisé pour piloter le dispositif de manipulation (2) sur la base du programme d'inspection sélectionné afin de positionner l'objet (O) dans la zone d'enregistrement (11).

6. Dispositif d'inspection (1) selon la revendication 5, **caractérisé en ce que** le dispositif de commande (13) est réalisé pour piloter l'unité d'éclairage (9) afin d'enregistrer une image de l'objet (O) positionné dans la zone d'enregistrement (11) selon le programme d'inspection.

7. Dispositif d'inspection (1) selon l'une quelconque des revendications précédentes, **caractérisé en ce que** le dispositif de caméra est un dispositif de caméra à distance focale fixe et/ou à distance d'image fixe.

8. Dispositif d'inspection (1) selon l'une quelconque des revendications précédentes, **caractérisé par** un module de détermination de position initiale, le module de détermination de position initiale étant réalisé pour déterminer une position initiale de l'objet (O) saisi et/ou maintenu par le dispositif de manipulation (2).

9. Dispositif d'inspection (1) selon la revendication 8, **caractérisé en ce que** le dispositif de commande (13) est réalisé pour piloter le dispositif de manipulation (2) de sorte que l'objet (O) est déplacé de la position initiale à la zone d'enregistrement (11) et/ou est positionné dans la zone d'enregistrement (11).

10. Dispositif d'inspection (1) selon la revendication 8 ou 9, **caractérisé en ce que** le module de détermination de position initiale est réalisé pour piloter le dispositif de caméra pour enregistrer au moins une image estimée et pour comparer le modèle (15) avec ladite au moins une image estimée et pour déterminer la position initiale de l'objet (O) à l'aide de la comparaison.

11. Installation de production, comprenant le dispositif d'inspection (1) selon l'une quelconque des revendications précédentes pour produire l'objet (O), le dispositif d'inspection (1) étant réalisé pour inspecter visuellement au moins 90 pour cent des objets produits (O).

12. Procédé d'inspection visuel de l'objet à l'aide du dispositif d'inspection (1) selon l'une quelconque des revendications précédentes, **caractérisé en ce que** le dispositif de commande (13) pilote le dispositif de manipulation (2) pour positionner l'objet sur la base du modèle (15) dans la zone d'enregistrement (11) du dispositif de caméra.

13. Procédé d'inspection visuel selon la revendication 12, **caractérisé en ce que** le dispositif de manipulation (2) prend et/ou saisit l'objet, le dispositif de caméra enregistre au moins une image estimée de l'objet, dans lequel le module de détermination de position initiale compare l'image estimée avec le modèle (15) et détermine la position initiale sur la base de la comparaison.
